# EUROPÄISCHE PATENTSCHRIFT

(11) **EP 2 451 609 B1**
(45) Veröffentlichungstag und Bekanntmachung des Hinweises auf die Patenterteilung: **06.09.2017**
(21) Anmeldenummer: 10744847.4
(22) Anmeldetag: 07.07.2010
(51) Int. Cl.: B23Q 3/06, F16B 11/00, F01D 5/28

(54) **VORRICHTUNG UND VERFAHREN ZUM ANORDNEN EINES BAUTEILS AN EINEM BAUTEILTRÄGER**
DEVICE AND METHOD FOR ARRANGING A COMPONENT ON A COMPONENT CARRIER
DISPOSITIF ET PROCÉDÉ POUR PLACER UNE PIÈCE SUR UN SUPPORT ASSOCIÉ

(30) Priorität: 09.07.2009 DE 102009032703
(43) Veröffentlichungstag der Anmeldung: 16.05.2012
(60) Teilanmeldung: 15150656.5
(73) Patentinhaber: MTU Aero Engines AG, 80995 München (DE)
(72) Erfinder: FESSLER-KNOBEL, Martin, 80639 München (DE); HUTTNER, Roland, 82287 Jesenwang (DE)
(86) Internationale Anmeldenummer: PCT/DE2010/000784
(87) Internationale Veröffentlichungsnummer: WO 2011/003399

(56) Entgegenhaltungen:
- EP-A1- 1 947 156
- WO-A1-01/97707
- WO-A1-02/45614
- WO-A1-2010/105612
- WO-A1-2010/130249
- WO-A2-2004/014587
- JP-A- 2001 054 945
- US-A- 5 380 387

## Beschreibung

Die Erfindung betrifft eine Vorrichtung zum Anordnen eines Bauteils an einem Bauteilträger nach dem Oberbegriff des Patentanspruchs 1 und ein Verfahren zum Anordnen eines Bauteils an einem derartigen Bauteilträger.

Es ist bekannt, zu bearbeitende Bauteile über eine Klebeverbindung an einem Bauteilträger zu befestigen. Bekannte Fügevorrichtungen dieser Art sehen vor, das Bauteil in einem vorrichtungsseitigen Anlagensystem zu positionieren und dann das Bauteil über das Anlagensystem zum lagefixierten Bauteilträger auszurichten. Ein sich hierbei einstellender Klebespalt zwischen dem Bauteil und dem Bauteilträger ergibt sich aus der Form des Bauteils und wird somit unmittelbar von Formtoleranzen des Bauteils beeinflusst.

Ebenso ist es bekannt, das Bauteil ohne eine Referenzierung zum Bauteilträger auszurichten und mit diesem zu verbinden. Eine derartige Variante ist zum Beispiel in der DE 10 2007 020 957 A1 der Anmelderin gezeigt. Bei dieser Variante kann ein Klebespalt zwischen dem Bauteil und dem Bauteilträger optimal eingestellt werden, jedoch ist stets ein individuelles Vermessen des Bauteils an dem Bauteilträger mit anschließender Korrektur der Achsen in der jeweiligen Bearbeitungsmaschinen notwendig. JP-2001054945 offenbart eine Vorrichtung nach dem Oberbegriff des Anspruchs 1. Aufgabe der Erfindung ist es, eine Vorrichtung und ein Verfahren zum Anordnen eines Bauteils an einem Bauteilträger zu schaffen, die die vorgenannten Nachteile beseitigen und eine präzise Positionierung und Anordnung des Bauteils zum bzw. am Bauteilträger bei optimalen Klebespalt erlauben.

Diese Aufgabe wird gelöst durch eine Vorrichtung zum Anordnen eines Bauteils an einem Bauteilträger mit den Merkmalen des Patentanspruchs 1 und durch ein Verfahren zum Anordnen eines Bauteils an einem Bauteilträger nach dem Patentanspruch 6. Eine erfindungsgemäße Fügevorrichtung zum Anordnen eines Bauteils an einem Bauteilträger hat ein Anlagesystem zur Positionierung des Bauteils in der Fügevorrichtung und eine Aufnahme zum Einspannen des Bauteilträgers in der Fügevorrichtung. Erfindungsgemäß ist ein Adapter zum Anordnen des Bauteils an dem Bauteilträger vorgesehen.

Somit wird das Bauteil nicht unmittelbar an dem Bauteilträger fixiert, sondern mittelbar über einen Adapter bzw. ein Zwischenstück. Das Anlagesystem de Bauteils steht dadurch in fester Relation zu dem Anlagesystem de Bauteilträgers. Das Bauteil kann mit dem Bauteilträger präzise verbunden werden und gleichzeitig kann ein optimaler Klebespalt und somit eine optimale Klebeverbindung zwischen dem Adapter und dem Bauteil eingestellt werden. Der Klebespalt kann den jeweiligen Anforderungen des Klebemittels angepasst werden. Formabweichungen des Bauteils werden nicht wie beim bekannten Stand der Technik durch die Dicke des Klebespaltes ausgeglichen, sondern durch die Position des Adapters zum Bauteil und zum Bauteilträger. Der Adapter hat zumindest eine einer Bauteilfläche zugewandte konturnahe Fügefläche und eine einer Bauteilträgerfläche zugewandte Verbindungsfläche. Die konturnahe Fügefläche erlaubt bei einem Verschieben des Adapters zum Bauteil die Einhaltung eines zuvor eingestellten optimalen Klebespaltes zwischen dem Bauteil und dem Adapter.

Zur verbesserten Spaltausbildung ist es vorteilhaft, wenn die Fügefläche kleiner als die Bauteilfläche ist und somit nur einen Abschnitt der Bauteilfläche bedeckt.

Die Aushärtung des Klebemittels lässt sich weiter verbessern, wenn eine Vielzahl von Fügeflächen vorgesehen sind, die zur Erzielung einer größtmöglichen Steifigkeit des Bauteils verhältnismäßig weit voneinander beabstandet sind. Eine Variante sieht zum Beispiel vor, den Adapter als ein Gitter auszubilden. Der Adapter besteht aus einem zumindest abschnittweise lichtdurchlässigen Basiskörper, beispielsweise Quarzglas. Hierdurch kann eine elektromagnetische Strahlung aussendende Strahlungsquelle an einer von der Fügefläche abgewandten Seite des Adapters angeordnet sein, so dass sich der Adapter zwischen dem Bauteil und der Strahlungsquelle befindet und die Fügevorrichtung kompakt ausführbar ist. Beispielsweise kann der Adapter mit Ausnehmungen versehen sein, die mit lichdurchlässigem Material gefüllt sind.

Eine Variante sieht zur Erreichung einer hohen Gestaltungsfreiheit der Fügefläche vor, diese aus einem anderen Material als den Basiskörper des Adapters herzustellen.

Zur Kontrolle der Sollposition des Bauteils in dem Anlagesystem der Vorrichtung können entsprechende Sensoren vorgesehen sein.

Der Bauteilträger ist bevorzugterweise in der Aufnahme der Vorrichtung lagefixiert, so dass versehentliche Positionsveränderungen des Bauteilträgers vermieden werden.

Zur Kontrolle der Sollposition des Bauteilträgers in der Aufnahme können entsprechende Sensoren vorgesehen sein.

Bei einem Ausführungsbeispiel ist der Bauteilträger eine Basisplatte eines Nullpunkt-Spannsystems. Hierdurch ist ein schnelles und einfaches Einrüsten einer die Bearbeitungsplatte mit dem Bauteil aufnehmenden folgenden Bearbeitungsmaschine möglich.

Zur Sicherung des Adapters und des Bauteils in ihren ausgerichteten Positionen beim Aushärten des Klebemittels können Stützelemente, beispielsweise Federelemente, zum Stützen des Adapters vorgesehen sein.

Bei einem erfindungsgemäßen Verfahren zum Anordnen eines Bauteils an einem Bauteilträger wird der Bauteilträger in einer Aufnahme einer Fügevorrichtung ausgerichtet und lagefixiert. Dann wird ein Anlagesystem der Fügevorrichtung eingestellt und das Bauteil an dem Anlagesystem positioniert. Anschließend wird ein Adapter zum Verbinden des Bauteils mit dem Bauteilträger bereitgestellt. Danach wird eine Klebeverbindung zwischen dem Adapter und dem Bauteil unter Einstellung eines Sollspalts zwischen dem Adapter und dem Bauteil hergestellt. Anschließend wird eine Klebeverbindung zwischen dem Adapter und dem Bauteilträger unter Beibehaltung des Sollspaltes zwischen dem Adapter und dem Bauteil hergestellt. Abschließend werden die Klebeverbindungen ausgehärtet.

Bei einem bevorzugten Ausführungsbeispiel erfolgt die Aushärtung des Klebemittels durch eine andersartige Strahlung als das Aufheben der Klebeverbindungen, zum Beispiel mittels elektromagnetischer Strahlung. Die zum Lösen verwendete Strahlung kann hierbei derart gewählt werden, dass diese die Klebung erwärmt und somit schädigt.

Sonstige vorteilhafte Ausführungsbeispiele sind Gegenstand weiterer Unteransprüche.

Im Folgenden werden bevorzugte Ausführungsbeispiele der Erfindung anhand schematischer Darstellungen näher erläutert. Es zeigt
Figur 1 eine geschnittene Seitenansicht eines ersten Ausführungsbeispiels der Erfindung, und
Figur 2 einen Schnitt entlang der Linie A-A aus Figur 1.

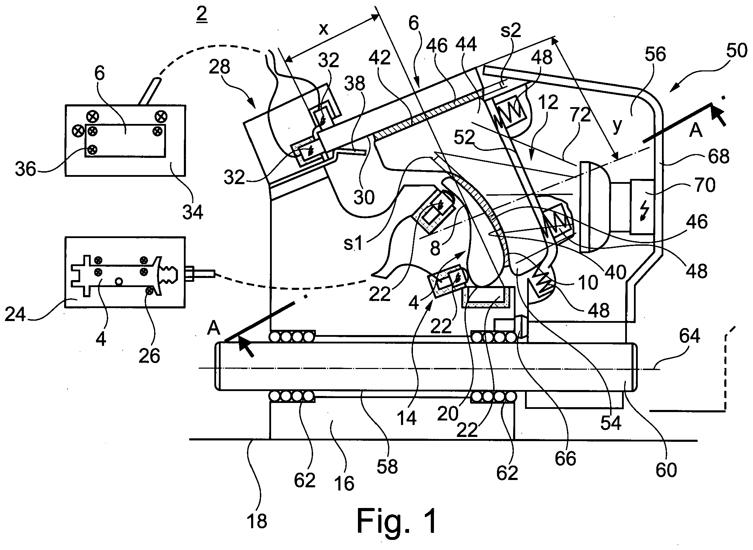

Figur 1 zeigt eine erfindungsgemäße Fügevorrichtung 2 zur Anordnung und Ausrichtung eines Bauteils 4 an einem Bauteilkörper 6. Das Bauteil 4 ist als eine Turbinen- bzw. Verdichterschaufel eines Flugzeugtriebwerks dargestellt und hat ein Schaufelblatt mit einer etwa konkaven Oberfläche 8 und einer von dieser abgewandten etwa konvexen Oberfläche 10.

Das Bauteil 4 ist erfindungsgemäß über einen Adapter 12 an dem Bauteilträger 6 angeordnet und in einem Anlagesystem 14 der Fügevorrichtung 2 positioniert. Das Anlagesystem 14 ist an einem Seitenabschnitt eines Grundkörpers 16 der Fügevorrichtung ausgebildet, der sich mit seinem Fußabschnitt auf einem Arbeitsboden 18 abstützt. Zur Kontrolle der richtigen Position in dem Anlagesystem 14 sind bei dem dargestellten Ausführungsbeispiel sechs elektrische Sensoren 22 vorgesehen, die im Bereich der konkaven Oberfläche 8 und einer Anströmkante 20 an dem Bauteil 4 angreifen. In der gewählten Darstellung sind jedoch lediglich zwei Sensoren 22 sichtbar. Die Sensoren 22 stehen mit einer Anzeigetafel 24 in Verbindung, die jeweils eine einem Sensor 22 zugeordnete Kontrolllampe 26 aufweist, die bei richtiger bzw. fehlerhafter Positionierung ein optisches Signal aussendet.

Der Bauteilträger 6 ist eine Basis- bzw. Grundplatte eines Nullpunkt-Spannsystems und mit seinem Randabschnitt in einer Aufnahme 28 der Fügevorrichtung 2 lagefixiert. Er ist als eine Standartschnittstelle für eine Bauteilfamilie mit einer ebenen Befestigungsfläche 30 zur Anbindung des Adapters 12 ausgebildet.

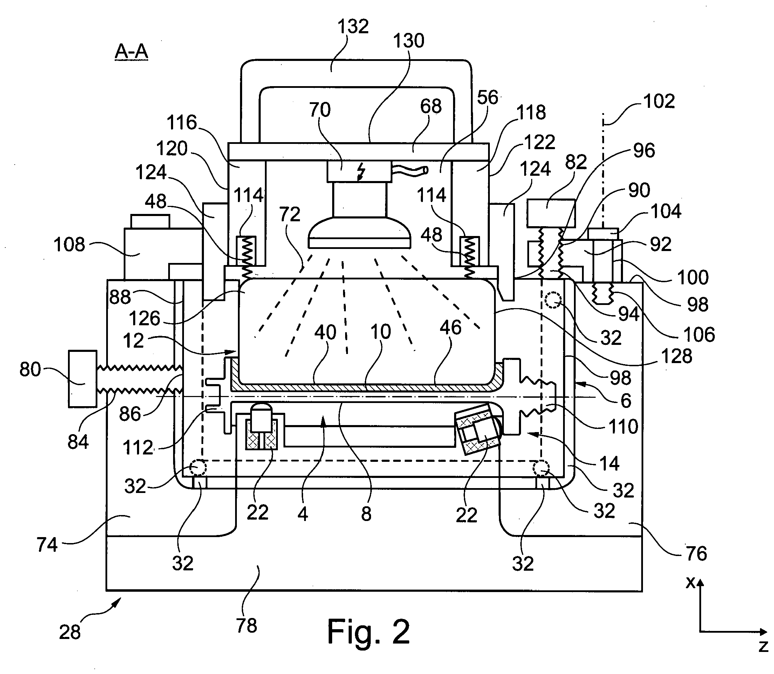

Die Aufnahme 28 ist fest mit einem Kopfabschnitt des Grundkörpers 16 verbunden und wie in Figur 2 gezeigt u-förmig ausgebildet. Zur Kontrolle der Position des Bauteilträgers 6 sind sechs elektrische Sensoren 32 vorgesehen, die sich bei richtiger Einspannung des Bauteilträgers 6 jeweils mit dem Bauteilträger 6 in Anlage befinden. In der gewählten Darstellung sind jedoch lediglich zwei Sensoren 32 sichtbar. Die Sensoren 32 stehen mit einer Anzeigetafel 34 in Verbindung, die jeweils eine einem Sensor 32 zugeordnete Kontrolllampe 36 aufweist, die bei richtiger bzw. fehlerhafter Positionierung ein optisches Signal aussenden. Zur Sicherung des Bauteilträgers 6 in seiner Position ist eine Federzunge 38 vorgesehen, die mit einem Endabschnitt zwischen dem Kopfabschnitt des Grundkörpers 16 und der Aufnahme 28 angeordnet ist und mit ihrem freien Endabschnitt im Randbereich der Befestigungsfläche 30 angreift.

Der Adapter 12 hat eine in etwa L-förmige Gestalt und weist eine zur konvexen Oberfläche 10 konturnahe Fügefläche 40 sowie eine ebene Verbindungsfläche 42 auf. Er hat einen Basiskörper 44 aus einem lichtdurchlässigen Material, beispielsweise Quarzglas. Die Fügefläche 40 besteht aus einem anderen lichtdurchlässigem Material und ist als eine Beschichtung auf den Basiskörper 44 aufgetragen. Unter Berücksichtigung von Figur 2 bedeckt in dem gezeigten Ausführungsbeispiel die Fügefläche 40 etwa die gesamte ihr zugewandte konvexe Oberfläche 10. Der Adapter 12 ist über jeweils eine Klebeverbindung mit der konvexen Oberfläche 10 des Bauteils 4 und mit dem der Befestigungsfläche 30 des Bauteilträgers 6 verbunden. Zur Herstellung der Klebeverbindungen zwischen die Fügefläche 40 und der konvexen Oberfläche 10 sowie zwischen der Verbindungsfläche 42 und der Befestigungsfläche 30 ist ein geeignetes Klebemittel 46 vorgesehen, das jeweils einen Klebespalt s1, s2 zwischen dem Adapter 12 und dem Bauteil 4 sowie zwischen dem Adapter 12 und dem Bauteilträger 6 definiert, wobei der Klebespalt s1 zwischen dem Bauteil 4 und dem Adapter 12 mit einer optimalen Dicke eingestellt ist.

Zum Sichern des Adapters 12 in seiner ausgerichteten Position sind eine Vielzahl von Federelementen 48 vorgesehen, die sich an einer Schutzhaube 50 der Fügevorrichtung 2 abstützen und an einer zur Fügefläche 40 entgegengesetzten Adapterfläche 52 bzw. an einer zur Verbindungsfläche 42 entegegengesetzten Adapterfläche 54 angreifen. Die Schutzhaube 50 begrenzt einen Arbeitsraum 56 und ist auf einem Endabschnitt einer sich durch eine Bohrung 58 des Grundkörpers 16 erstreckenden Achse 60 angeordnet. Die Achse 60 ist in der Bohrung 58 über in radialen Zurückstufungen der Bohrung 58 eingesetzten Lagern 62 entlang ihrer Längsachse 64 verfahrbar und um ihre Längssachse 64 verschwenkbar. Der Arbeitsraum 56 ist geschlossen, wenn sich die Schutzhaube 50 mit einem in den Grundkörper 16 eingesetzten Anschlag 66 in Anlage befindet.

Zum Aushärten bzw. zum Aufheben der Klebeverbindungen ist an einer Rückwand 68 der Schutzhaube 50 eine Strahlungsquelle 70 angeordnet, die in Richtung des Bauteils 4 und durch den Adapter 12 hindurch elektromagnetische Strahlung 72 wie Licht emittiert.

Gemäß der Schnittdarstellung in Figur 2 ist die Aufnahme 28 U-förmig mit einer linken Seitenwange 74 und einer rechten Seitenwange 76 ausgebildet, die über einen Steg 78 miteinander verbunden sind. Der Bauteilträger 6 ist rechteckig ausgeführt und umfangsseitig von der Aufnahme 28 beabstandet. Zum Ausrichten des Bauteilträgers 6 in der Aufnahme 28 in z-Richtung und in x-Richtung sind zwei Stellschrauben 80, 82 vorgesehen. Die Stellschraube 80 beaufschlagt mit ihrem Gewindefuß 86 eine Seitenfläche 88 des Bauteilträgers 6 in
z-Richtung und ist in einer Innengewindebohrung 84 der linken Seitenwange 74 geführt. Die Stellschraube 82 zur Positionierung des Bauteilträgers 6 in x-Richtung ist in einer Innenengewindebohrung 90 eines Arms 92 im Bereich der rechten Seitenwange 76 geführt und greift mit ihrem Gewindefuß 94 ebenfalls an einer Seitenfläche 96 des Bauteilträgers 6 an. Zum Einsetzen des Bauteilträgers 6 in die Aufnahme ist der Arm 92 verschwenkbar an einer Stirnfläche 98 der rechten Seitenwange 76 gelagert. Hierzu weist der Arm 92 eine Durchgangsbohrung 100 auf, durch die eine eine Schwenkachse 102 definierende Klemmschraube 104 geführt ist, die mit einem Innengewinde 106 der rechten Seitenwange 76 in Wirkeingriff steht. Ein ähnlicher schwenkbarer Arm 108 ist im Bereich der linken Seitenwange 74 stirnseitig positioniert, jedoch weist dieser Arm 108 keine Stellschraube 82 auf. Die Kontrolle der Ausrichtung des Bauteilträgers 6 erfolgt über die sechs Sensoren 32, die im Randabschnitt des Bauteilträgers 6 an diesem angreifen.

Das Bauteil 4 ist zwischen dem Anlagesystem 14 und dem Adapter 12 angeordnet. In dem gezeigten Schnitt befindet sich das Bauteil 4 mit seiner konkaven Oberfläche 8 in Anlage mit zwei Sensoren 22, die im Bereich eines Schaufelfußes 110 und eines Deckbandes 112 des Bauteils 4 angreifen. Im Bereich der konvexen Oberfläche 10 ist das Bauteil 4 über das Klebemittel 46 mit der Fügefläche 40 des Adapters 12 verbunden.

Der Adapter 12 ist über die Federelemente 48 in Richtung des Bauteils 4 vorgespannt, die abschnittsweise in Ausnehmungen 114 der Schutzhaube 50 eintauchen und sich am Grund der Ausnehmungen 114 abstützen.

Die Schutzhabe 50 hat in dem gezeigten U-förmigen Querschnitt zwei Seitenwände 116, 118, die über die Rückwand 68 miteinander verbunden sind. Die Ausnehmungen 114 zur Aufnahme der Federelemente 48 sind stirnseitig in den Seitenwänden 116, 118 ausgebildet. Zur Führung des Adapters 12 in z-Richtung ist an voneinander abgewandten Außenflächen 120, 122 der Seitenwände 116, 118 jeweils ein Finger 124 angeordnet, der an einer Seitenfläche 126, 128 des Adapters 12 angreift. Zum vereinfachten Bewegen bzw. Öffnen und Schlie-βen des Arbeitsraums 56 ist an einer von der Strahlungsquelle 70 abgewandten Außenfläche 130 der Schutzhaube 50 ein Griff 132 angeordnet.

Im Folgenden wird ein bevorzugtes Ausführungsbeispiel eines erfindungsgemäßen Verfahrens zur Anbindung des Bauteils 4 an dem Bauteilträger 6 beschrieben: Zuerst wird der Bauteilträger 6 in die Aufnahme 28 eingesetzt und über die Stellschrauben 80, 82 lagefixiert. Dann wird das Bauteil auf dem Anlagesystem 14 der Fügevorrichtung 2 positioniert. Anschließend wird der Adapter 12 bereitgestellt und an seiner Fügefläche 40 und seiner Verbindungsfläche 42 mit dem Klebemittel 46 versehen. Anschließend wird der Adapter 12 in Richtung des Bauteils 4 bewegt, und es wird unter Einstellung eines optimalen Klebespaltes s1 eine Klebeverbindung r zwischen der Fügefläche 40 des Adapters 12 und der konvexen Oberfläche 10 des Bauteils 4 hergestellt. Anschließend wird unter Beibehaltung des Klebespaltes s1 der Adapter 12 zum Bauteilträger 6 ausgerichtet und eine Klebeverbindung zwischen der Verbindungsfläche 42 des Adapters 12 und der Befestigungsfläche 30 des Bauteilträgers 6 wird hergestellt. Gleichzeitig wird die richtige Position des Bauteils 4 an dem Anlagesystem 14 und die richtige Position des Bauteilträgers 6 in der Aufnahme 28 über die Kontrolllampen 26, 36 der Anzeigentafeln 24, 34 kontrolliert. Nach dem Herstellen der Klebeverbindungen wird der Arbeitsraum 56 durch ein Verfahren der Schutzhaube 50 geschlossen und der Adapter 12 wird über die Federelemente 48 in seiner ausgerichteten Position gesichert. Sobald der Arbeitsraum 56 geschlossen ist und das Bauteil 4, der Adapter 12 sowie der Bauteilträger 6 ihre Ausrichtung zueinander nicht geändert haben, wird die Strahlungsquelle 70 angesteuert und das Klebemittel 46 beginnt aufgrund der emittierenden Strahlung 72 auszuhärten. Nach der Aushärtung wird die Bestrahlung beendet und der Arbeitsraum 56 wird über ein Verfahren der Schutzhaube 50 geöffnet. Der Bauteilträger 6 mit dem angebundenen Adapter 12 und dem Bauteil 4 wird der Fügevorrichtung 2 entnommen und in eine folgende Bearbeitungsmaschine zur Bearbeitung des Bauteils 4 eingespannt.

Nach der Bearbeitung des Bauteils 4 in der Bearbeitungsmaschine wird die Klebeverbindung zwischen dem Adapter 12 und dem Bauteil 4 sowie zwischen dem Adapter 12 und dem Bauteilträger 6 über zum Beispiel Wärmestrahlung aufgehoben, und der Bauteilträger 6 steht für eine erneute Bestückung und somit für eine erneute Verwendung in der Fügevorrichtung 2 bereit.

Offenbart ist eine Fügevorrichtung zum Anordnen eines Bauteils an einem Bauteilträger mit einem Anlagesystem zur Positionierung des Bauteils in der Fügevorrichtung und mit einer Aufnahme zum Einspannen des Bauteilträgers in der Fügevorrichtung, wobei das Bauteil über einen Adapter an dem Bauteilträger angeordnet ist, sowie ein Verfahren zur Anordnung des Bauteils an dem Bauteilträger.

## Patentansprüche

1. Fügevorrichtung (2) zum Anordnen eines Bauteils (4) an einem Bauteilträger (6) mit einem Anlagesystem (14) zur Positionierung des Bauteils (4) in der Fügevorrichtung (2), mit einer Aufnahme (28) zum Einspannen des Bauteilträgers (6) in der Fügevorrichtung (2) und mit einem Adapter (12, der eine einer Bauteilfläche (10) zugewandte konturnahe Fügefläche (40) aufweist und eine einer Bauteilträgerfläche (30) zugewandte Verbindungsfläche (42) hat, so dass das Bauteil (4) mittelbar über den Adapter an dem Bauteilträger (6) angeordnet werden kann,
**dadurch gekennzeichnet, dass**
- der Adapter (12) zumindest abschnittsweise aus einem lichtdurchlässigen Basiskörper (44) besteht,
- zwischen dem Adapter (12) und dem Bauteil (4) und dem Adapter (12) und dem Bauteilträger (6) Klebemittel (46) angeordnet werden kann,
- zusätzlich eine elektromagnetische Strahlung aussendende Strahlungsquelle (70) an einer von der Fügefläche abgewandten Seite des Adapters (12) angeordnet ist so dass sich der Adapter (12) zwischen dem Bauteil und der Strahlungsquelle befindet,
- zum Sichern des Adapters (12) in seiner ausgerichteten Position Stützelemente (48) vorhanden sind.

2. Fügevorrichtung nach Anspruch 1, wobei die Fügefläche (40) kleiner als die Bauteilfläche (10) ist.

3. Fügevorrichtung nach Anspruch 1 oder 2, wobei der Adapter (12) eine Vielzahl von der Bauteilfläche (10) zugewandten Fügeflächen (40) hat.

4. Fügevorrichtung nach einem der vorhergehenden Ansprüche, wobei das Anlagersystem (14) in einer festen Position zu der Aufnahme (28) ist.

5. Fügevorrichtung nach einem der vorhergehenden Ansprüche, wobei der lichtdurchlässige Basiskörper (44) Quarzglas ist.

6. Verfahren zum Anordnen eines Bauteils (4) an einem Bauteilträger (6) unter Verwendung der Vorrichtung gemäß einem der Anspruche 1 bis 5, umfassend die folgenden Schritte:
- Ausrichten und Lagefixieren des Bauteilträgers (6) in einer Aufnahme (28) einer Fügevorrichtung (2),
- Positionieren des Bauteils (4) an dem Anlagesystem (14),
- Bereitstellen eines Adapters (12) zwischen dem Bauteils (4) zum Bauteilträger (6),
- Herstellen einer Klebeverbindung zwischen dem Adapter (12) und dem Bauteil (4) unter Einstellung eines Sollspalts (s1) zwischen dem Adapter (12) und dem Bauteil (4),
- Herstellen einer Klebeverbindung zwischen dem Adapter (12) und dem Bauteilträger (6) unter Beibehaltung des Sollspaltes (s1) zwischen dem Adapter (12) und dem Bauteil (4), und
- Aushärten der Klebeverbindungen.

7. Verfahren nach Anspruch 6, wobei die Aushärtung und Aufhebung der Klebeverbindungen mittels unterschiedlicher Strahlung (72) erfolgt.

## Claims

1. A joining device (2) for arranging a component (4) on a component carrier (6) with an application system (14) for positioning the component (4) in the joining device (2), and with a receptacle (28) for clamping the component carrier (6) in the joining device (2) and an adapter (12) that has a closely-contoured joining surface (40) facing the convex surface (10) and has a connecting surface (42) facing a component carrier surface (30), so that the component (4) can be arranged indirectly via the adapter on the component carrier (6),
**characterized in that**:
- the adapter (12) is composed at least in some sections of a translucent basic body (44);
- adhesive (46) can be arranged between the adapter (12) and the component (4) and the adapter (12) and the component carrier (6),
- a radiation source (70) emitting electromagnetic radiation is additionally arranged on a side of the adapter (12) facing away from the joining surface, so that the adapter (12) is located between the component and the radiation source;
- support elements (48) are present in order to secure the adapter (12) in the aligned position thereof.

2. The joining device according to claim 1, wherein the joining surface (40) is smaller than the component surface (10).

3. The joining device according to claim 1 or 2, wherein the adapter (12) has a plurality of joining surfaces (40) facing the component surface (10).

4. The joining device according to any of the preceding claims, wherein the application system (14) is in a fixed position relative to the receptacle (28).

5. The joining device according to any of the preceding claims, wherein the translucent basic body (44) is quartz glass.

6. A method for arranging a component (4) on a component carrier (6) by using the device according to any of claims 1 to 5, comprising the following steps:
- aligning and fixing the component carrier (6) in a receptacle (28) of a joining device (2);
- positioning the component (4) on the application system (14);
- deploying an adapter (12) between the component (4) and the component carrier (6);
- establishing an adhesive connection between the adapter (12) and the component (4) while adjusting a target gap (s1) between the adapter (12) and the component (4);
- establishing an adhesive connection between the adapter (12) and the component carrier (6) while maintaining the target gap (s1) between the adapter (12) and the component (4); and
- curing the adhesive connections.

7. The method according to claim 6, wherein the curing and the releasing of the adhesive connections take place by means of different types of radiation (72).

## Revendications

1. Dispositif de jonction (2) pour agencer une pièce (4) sur un support de pièce (6) avec un système d'installation (14) pour positionner la pièce (4) dans le dispositif de jonction (2) avec un logement (28) pour bloquer le support de pièce (6) dans le dispositif de jonction (2) et avec un adaptateur (12) qui présente une surface de jonction (40) de contour proche tournée vers une surface de pièce (10) et a une surface de liaison (42) tournée vers la surface (30) du support de pièce de sorte que la pièce (4) puisse être agencée directement via l'adaptateur sur le support de pièce (6),
**caractérisé en ce que** :
- l'adaptateur (12) est constitué au moins par sections d'un corps de base transparent (44),
- un agent adhésif (46) peut être agencé entre l'adaptateur (12) et la pièce (4) et entre l'adaptateur (12) et le support de pièce (6),
- une source de rayonnement (70) émettant un rayonnement électromagnétique est agencé en outre sur un côté de l'adaptateur (12) opposé à la surface de jonction de sorte que l'adaptateur (12) se trouve entre la pièce et la source de rayonnement,
- des éléments d'appui (48) sont présents pour bloquer l'adaptateur (12) dans sa position alignée.

2. Dispositif de jonction selon la revendication 1, dans lequel la surface de jonction (40) est plus petite que la surface (10) de la pièce.

3. Dispositif de jonction selon la revendication 1 ou 2, dans lequel l'adaptateur (12) a une pluralité de surfaces de jonction (40) tournées vers la surface (10) de la pièce.

4. Dispositif de jonction selon l'une quelconque des revendications précédentes, dans lequel le système d'installation (14) est dans une position fixe vis-à-vis du logement (28).

5. Dispositif de jonction selon l'une quelconque des revendications précédentes, dans lequel le corps de base transparent (44) est du verre de quartz.

6. Procédé d'agencement d'une pièce (4) sur un support de pièce (6) en utilisant le dispositif selon l'une quelconque des revendications 1 à 5, comprenant les étapes consistant à :
- aligner et fixer en position le support de pièce (6) dans un logement (28) d'un dispositif de jonction (2),
- positionner la pièce (4) dans le système d'installation (14),
- disposer un adaptateur (12) entre la pièce (4) et le support de pièce (6),
- élaborer une liaison adhésive entre l'adaptateur (12) et la pièce (4) en réglant un intervalle nominal (s1) entre l'adaptateur (12) et la pièce (4),
- élaborer une liaison adhésive entre l'adaptateur (12) et le support de pièce (6) en respectant l'intervalle nominal (s1) entre l'adaptateur (12) et la pièce (4) et
- durcir les liaisons adhésives.

7. Procédé selon la revendication 6, dans lequel le durcissement et la neutralisation des liaisons adhésives se font au moyen d'un rayonnement différent (72).
